# EUROPEAN PATENT APPLICATION

(11) **EP 4 790 367 A1**
(43) Date of publication of application: **12.08.2026**
(21) Application number: 26152236.1
(22) Date of filing: 16.01.2026
(51) Int. Cl.: G01F 1/66, G01F 25/10

(54) **APPARATUS FOR MONITORING FLUID FLOW AND ASSOCIATED METHODS**

(30) Priority: 10.02.2025 US 202519049576
(71) Applicant: General Electric Company, Cincinnati, Ohio 45215 (US)
(72) Inventor: ANDARAWIS, Emad Andarawis, Niskayuna, 12309 (US); WALLACE, Kirk Dennis, Niskayuna, 12309 (US)
(74) Representative: Openshaw & Co.

(57) **Abstract**

An apparatus for monitoring fluid flow includes a computing system configured to initiate a sensor calibration operation, determine a first time period between when a first transceiver-based sensor emits a first sensor signal directed at a second transceiver-based sensor and when the first transceiver-based sensor receives a first reflection signal that is reflected off of the second transceiver-based sensor. The computing system is configured to determine a second time period between when the second transceiver-based sensor emits a second sensor signal directed at the first transceiver-based sensor and when the second transceiver-based sensor receives a second reflection signal reflected off of the first transceiver-based sensor. The computing system is configured to determine a difference between the first time period and the second time period and calibrate at least one of the first transceiver-based sensor or the second transceiver-based sensor when the determined difference exceeds a threshold value.

## Description

### FIELD

The present disclosure is related to monitoring fluid flow and, more specifically, to systems for monitoring fluid flow, such as in connection with the operation of a gas turbine engine, and associated methods.

### BACKGROUND

It is generally necessary to monitor or otherwise measure the flow rates of fluids in certain systems to control and/or ensure the proper functioning of such systems. For example, it is important to accurately monitor the flow rate of fuel being delivered to a gas turbine engine to properly control the engine. In this respect, many fuel flow monitoring systems rely on transceiver-based sensors (e.g., ultrasonic sensors) due to their accuracy and non-obtrusive operation.

In general, it is necessary to calibrate transceiver-based sensors at certain times (e.g., when the engine is started) or after a certain amount of use. In this respect, systems and methods for calibrating transceiver-based sensors have been developed. While such systems work well, further improvements are needed.

### BRIEF DESCRIPTION OF THE DRAWINGS

A full and enabling disclosure of the present disclosure, including the best mode thereof, directed to one of ordinary skill in the art, is set forth in the specification, which makes reference to the appended figures, in which:
FIG. 1 is a schematic cross-sectional view of one embodiment of a gas turbine engine in accordance with aspects of the present disclosure.
FIG. 2 is a diagrammatic view of one embodiment of an apparatus for monitoring fluid flow in accordance with aspects of the present disclosure.
FIG. 3 is a flow diagram illustrating one embodiment of control logic for monitoring fluid flow in accordance with aspects of the present disclosure.
FIG. 4 is a flow diagram illustrating one embodiment of a method for monitoring fluid flow in accordance with aspects of the present disclosure.

### DETAILED DESCRIPTION

Reference will now be made in detail to present embodiments of the disclosure, one or more examples of which are illustrated in the accompanying drawings. The detailed description uses numerical and letter designations to refer to features in the drawings. Like or similar designations in the drawings and description have been used to refer to like or similar parts of the disclosure.

The word "exemplary" is used herein to mean "serving as an example, instance, or illustration." Any implementation described herein as "exemplary" is not necessarily to be construed as preferred or advantageous over other implementations. Additionally, unless specifically identified otherwise, all embodiments described herein should be considered exemplary.

The singular forms "a", "an", and "the" include plural references unless the context dictates otherwise.

The term "at least one of" in the context of, e.g., "at least one of A, B, and C" refers to only A, only B, only C, or any combination of A, B, and C.

The terms "coupled," "fixed," "attached to," and the like refer to both direct coupling, fixing, or attaching, as well as indirect coupling, fixing, or attaching through one or more intermediate components or features unless otherwise specified herein.

As used herein, the terms "first," "second," and "third" may be used interchangeably to distinguish one component from another and are not intended to signify the location or importance of the individual components.

For purposes of the description hereinafter, the terms "upper," "lower," "right," "left," "vertical," "horizontal," "top," "bottom," "lateral," "longitudinal," and derivatives thereof shall relate to the embodiments as they are oriented in the drawing figures. However, it is to be understood that the embodiments may assume various alternative variations, except where expressly specified to the contrary. It is also to be understood that the specific devices illustrated in the attached drawings, and described in the following specification, are simply exemplary embodiments of the disclosure. Hence, specific dimensions and other physical characteristics related to the embodiments disclosed herein are not to be considered limiting.

The term "turbomachine" refers to a machine including one or more compressors, a heat-generating section (e.g., a combustion section), and one or more turbines that together generate a torque output.

The term "gas turbine engine" refers to an engine having a turbomachine as all or a portion of its power source. Example gas turbine engines include turbofan engines, turboprop engines, turbojet engines, turboshaft engines, etc., as well as hybrid-electric versions of one or more of these engines.

The term "combustion section" refers to any heat addition apparatus for a turbomachine. For example, the term combustion section may refer to a section including one or more of a deflagrative combustion assembly, a rotating detonation combustion assembly, a pulse detonation combustion assembly, or another appropriate heat addition assembly. In certain example embodiments, the combustion section may include an annular combustor, a can combustor, a cannular combustor, a trapped vortex combustor (TVC), or other appropriate combustion system, or combinations thereof.

The terms "low" and "high", or their respective comparative degrees (e.g., -er, where applicable), when used with a compressor, a turbine, a shaft, or spool components, etc. each refer to relative speeds within an engine unless otherwise specified. For example, a "low turbine" or "low-speed turbine" defines a component configured to operate at a rotational speed, such as a maximum allowable rotational speed, lower than a "high turbine" or "high-speed turbine" of the engine.

The terms "forward" and "aft" refer to relative positions within a gas turbine engine or vehicle, and are based on a normal operational attitude of the gas turbine engine or vehicle. More particularly, forward and aft are used herein with reference to a direction of travel of the vehicle and a direction of propulsive thrust of the gas turbine engine.

The terms "upstream" and "downstream" refer to the relative direction with respect to fluid flow in a fluid pathway. For example, "upstream" refers to the direction from which the fluid flows, and "downstream" refers to the direction in which the fluid flows.

As used herein, the terms "axial" and "axially" refer to directions and orientations that extend substantially parallel to a centerline of the gas turbine engine. Moreover, the terms "radial" and "radially" refer to directions and orientations that extend substantially perpendicular to the centerline of the gas turbine engine. In addition, as used herein, the terms "circumferential" and "circumferentially" refer to directions and orientations that extend arcuately about the centerline of the gas turbine engine.

In general, the present subject is directed to an apparatus for monitoring a fluid flow, such as a fuel flow being delivered to a gas turbine engine, and associated methods. As will be described below, the apparatus includes a fluid conduit (e.g., a fuel conduit or line) defining a flow passage through which a fluid (e.g., fuel) flows. Furthermore, the apparatus includes a first transceiver-based sensor (e.g., a first ultrasonic sensor) associated with (e.g., positioned within) the flow passage. Additionally, the apparatus includes a second transceiver-based sensor (e.g., a second ultrasonic sensor) associated with (e.g., positioned within) the flow passage downstream of the first transceiver-based sensor.

In several embodiments, a computing system is configured to perform a calibration of the first and second transceiver-based sensors. More specifically, the computing system is configured to initiate a sensor calibration operation, such as based on an operating parameter(s) of the engine, an operator input, a predetermined interval, and/or the like. In response to initiating the sensor calibration operation, the computing system is configured to determine a first time period between when the first transceiver-based sensor emits a first sensor signal directed at the second transceiver-based sensor and when the first transceiver-based sensor receives a first reflection signal corresponding to a portion of the first sensor signal that is reflected off of the second transceiver-based sensor. Moreover, in response to initiating the sensor calibration operation, the computing system is configured to determine a second time period between when the second transceiver-based sensor emits a second sensor signal directed at the first transceiver-based sensor and when the second transceiver-based sensor receives a second reflection signal corresponding to a portion of the second sensor signal that is reflected off of the first transceiver-based sensor. In addition, the computing system is configured to determine a difference between the first and the second time periods. Thereafter, the computing is configured to calibrate the first and/or second transceiver-based sensors when the determined difference exceeds a threshold value.

Calibrating the first and/or second transceiver-based sensors when the difference between the first and second time periods exceeds the threshold value improves the operation of the gas turbine engine. More specifically, it is necessary that the timing of the first and second transceiver-based sensors be aligned such that the first and second transceiver-based sensors provide the same flow values. In this respect, great care is generally taken to ensure the sensors and all associated equipment are properly selected and calibrated during installation to align the timing of the sensors. However, over time and/or due to wear and/or temperature variations, the timing of the first and second transceiver-based sensors may become mismatched or misaligned (e.g., due to differences in the time to convert the electric excitation signal into an acoustic/ultrasonic output signal). As indicated above, the first sensor signal and the associated first reflection signal travel through the flow path in the downstream direction and then the upstream direction. Similarly, the second sensor signal and the associated second reflection signal travel through the flow path in the upstream direction and then downstream direction. Thus, both signals have effectively experienced the same flow conditions. As such, when the timing of the first and second transceiver-based sensors are aligned, the difference in the amount of time between when each transceiver-based sensor emits the corresponding sensor signal and receives the corresponding reflection signal should be zero or close to zero. In this regard, the disclosed apparatus uses this difference to determine when to calibrate the first and/or second transceiver-based sensors. This, in turn, allows the disclosed apparatus to in situ calibrate out the effects of time, wear, temperature, differences in the electronic components or cabling (or the routing of such cabling) associated with the sensors, and the like on the first and second transceiver-based sensors, thereby providing more accurate and precise determinations of flow rate (which can improve the operation of the gas turbine engine).

Additionally, the apparatuss and methods disclosed herein can facilitate the use of redundant flow monitoring. For example, in certain applications, such as those in the aviation and aerospace fields, it is important to build redundancies into the fluid flow monitoring systems being used. More specifically, as described above, the disclosed apparatus and methods can be used to calibrate transceiver-based sensors. Thus, the calibration performed using disclosed apparatus and methods can be used with redundant transceiver-based sensor systems to ensure the effects of time, wear, temperature, differences in the electronic components or cabling (or the routing of such cabling) associated with the sensors, and the like on the sensors do not cause errors or inconsistencies in the redundant flow measurements.

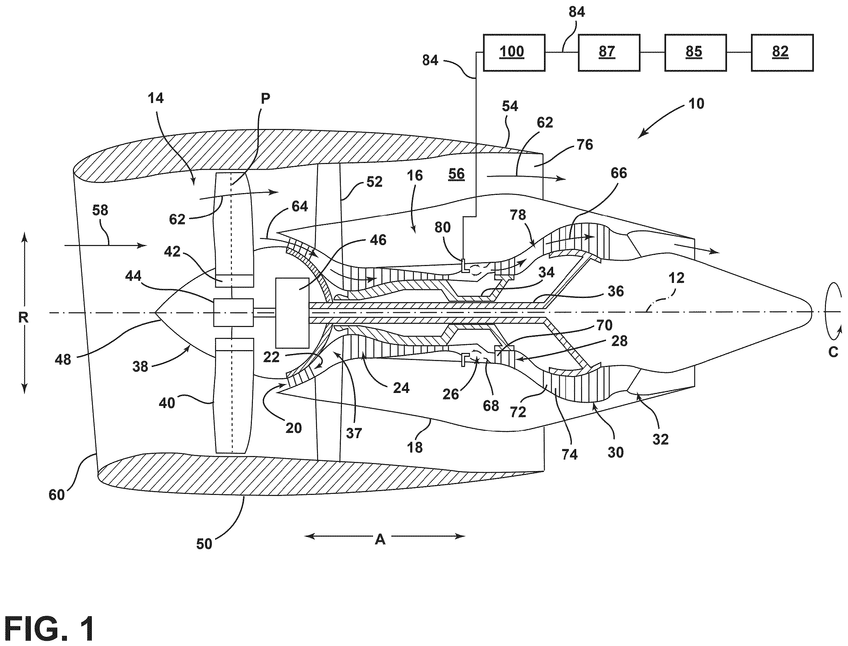

Referring now to the drawings, wherein identical numerals indicate the same elements throughout the figures, FIG. 1 is a schematic cross-sectional view of one embodiment of a gas turbine engine 10. More specifically, in the illustrated embodiment, the gas turbine engine 10 is a high-bypass turbofan jet engine, sometimes also referred to as a "turbofan engine." As shown in FIG. 1, the gas turbine engine 10 defines an axial direction A (extending parallel to a longitudinal centerline 12 provided for reference), a radial direction R, and a circumferential direction C extending about the longitudinal centerline 12. In general, the gas turbine engine 10 includes a fan section 14 and a turbomachine 16 disposed downstream of the fan section 14.

The turbomachine 16 generally includes a substantially tubular outer casing 18 that defines an annular inlet 20. The outer casing 18 encases, in serial flow relationship, a compressor section including a booster or low pressure (LP) compressor 22 and a high pressure (HP) compressor 24; a combustion section 26; a turbine section including a high pressure (HP) turbine 28 and a low pressure (LP) turbine 30; and a jet exhaust nozzle section 32. A high-pressure (HP) shaft 34 (which may additionally or alternatively be a spool) drivingly connects the HP turbine 28 to the HP compressor 24. A low-pressure (LP) shaft 36 (which may additionally or alternatively be a spool) drivingly connects the LP turbine 30 to the LP compressor 22. The compressor section, the combustion section 26, the turbine section, and the jet exhaust nozzle section 32 together define a working gas flow path 37.

In the illustrated embodiment, the fan section 14 includes a fan 38 having a plurality of fan blades 40 coupled to a disk 42 in a spaced apart manner. As depicted, the fan blades 40 extend outwardly from disk 42 generally along the radial direction R. Each fan blade 40 is rotatable relative to the disk 42 about a pitch axis P by the fan blades 40 being operatively coupled to a suitable pitch change mechanism 44 configured to collectively vary the pitch of the fan blades 40, e.g., in unison. The gas turbine engine 10 further includes a power gearbox 46, and the fan blades 40, disk 42, and pitch change mechanism 44 are together rotatable about the longitudinal centerline 12 by LP shaft 36 across the power gearbox 46. The power gearbox 46 includes a plurality of gears for adjusting the rotational speed of the fan 38 relative to the rotational speed of the LP shaft 36, such that the fan 38 may rotate at a more efficient fan speed.

Referring still to FIG. 1, the disk 42 is covered by rotatable front hub 48 of the fan section 14 (sometimes also referred to as a "spinner"). The front hub 48 is aerodynamically contoured to promote airflow through the plurality of fan blades 40.

Additionally, the exemplary fan section 14 includes an annular fan casing or outer nacelle 50 that circumferentially surrounds the fan 38 and/or at least a portion of the turbomachine 16. It should be appreciated that the nacelle 50 is supported relative to the turbomachine 16 by a plurality of circumferentially-spaced outlet guide vanes 52 in the embodiment depicted. Moreover, a downstream section 54 of the nacelle 50 extends over an outer portion of the turbomachine 16 to define a bypass airflow passage 56 therebetween.

During the operation of the gas turbine engine 10, a volume of air 58 enters the gas turbine engine 10 through an associated inlet 60 of the nacelle 50 and fan section 14. As the volume of air 58 passes across the fan blades 40, a first portion of air 62 is directed or routed into the bypass airflow passage 56, and a second portion of air 64 as indicated by arrow 64 is directed or routed into the working gas flow path 37, or more specifically into the LP compressor 22. The ratio between the first portion of air 62 and the second portion of air 64 is commonly known as a bypass ratio.

The pressure of the second portion of air 64 is then increased as it is routed through the HP compressor 24 and into the combustion section 26 for use in the combustion process. More specifically, the fuel may be supplied to one or more fuel nozzles 80 within the combustion section 26 from one or more fuel tanks 82 via one or more fuel lines or conduits 84, a pump 85, and valve 87. The fuel delivered to the combustion section 26 by the fuel nozzle(s) 80 mixes within the second portion of air 64. This air-fuel mixture is then combusted or otherwise burned to produce combustion gases 66. For example, as will be described below, an apparatus 100 for monitoring fluid flow may be positioned downstream of the pump 85 and/or the valve 87. The apparatus 100, in turn, may be used as part of a closed-loop feedback control system for the pump 85 and/or the valve 87.

Thereafter, the combustion gases 66 are routed through the HP turbine 28 where a portion of thermal and/or kinetic energy from the combustion gases 66 is extracted via sequential stages of HP turbine stator vanes 68 that are coupled to the outer casing 18 and HP turbine rotor blades 70 that are coupled to the HP shaft 34, thus causing the HP shaft 34 to rotate, supporting operation of the HP compressor 24. The combustion gases 66 are then routed through the LP turbine 30 where a second portion of thermal and kinetic energy is extracted from the combustion gases 66 via sequential stages of LP turbine stator vanes 72 that are coupled to the outer casing 18 and LP turbine rotor blades 74 that are coupled to the LP shaft 36, thus causing the LP shaft 36 to rotate, supporting operation of the LP compressor 22 and/or rotation of the fan 38.

The combustion gases 66 are subsequently routed through the jet exhaust nozzle section 32 of the turbomachine 16 to provide propulsive thrust. Simultaneously, the pressure of the first portion of air 62 is substantially increased as the first portion of air 62 is routed through the bypass airflow passage 56 before it is exhausted from a fan nozzle exhaust section 76 of the gas turbine engine 10, also providing propulsive thrust. The HP turbine 28, the LP turbine 30, and the jet exhaust nozzle section 32 at least partially define a hot gas path 78 for routing the combustion gases 66 through the turbomachine 16.

The gas turbine engine 10 depicted in FIG. 1 is by way of example only, and in other embodiments, the gas turbine engine 10 may have any other suitable configuration. For example, although the gas turbine engine 10 depicted is configured as a ducted gas turbine engine (i.e., including the outer nacelle 50), in other embodiments, the gas turbine engine 10 may be an unducted gas turbine engine (such that the fan 38 is an unducted fan, and the outlet guide vanes 52 are cantilevered from the outer casing 18). Additionally, or alternatively, although the gas turbine engine 10 depicted is configured as a geared gas turbine engine (i.e., including the power gearbox 46) and a variable pitch gas turbine engine (i.e., including a fan 38 configured as a variable pitch fan), in other embodiments, the gas turbine engine 10 may additionally or alternatively be configured as a direct drive gas turbine engine (such that the LP shaft 36 rotates at the same speed as the fan 38), as a fixed pitch gas turbine engine (such that the fan 38 includes fan blades 40 that are not rotatable about a pitch axis P), or both. Furthermore, in still other exemplary embodiments, aspects of the present disclosure may be incorporated into any other suitable gas turbine engine. For example, in other exemplary embodiments, aspects of the present disclosure may (as appropriate) be incorporated into, e.g., a turboprop gas turbine engine, a turboshaft gas turbine engine, or a turbojet gas turbine engine.

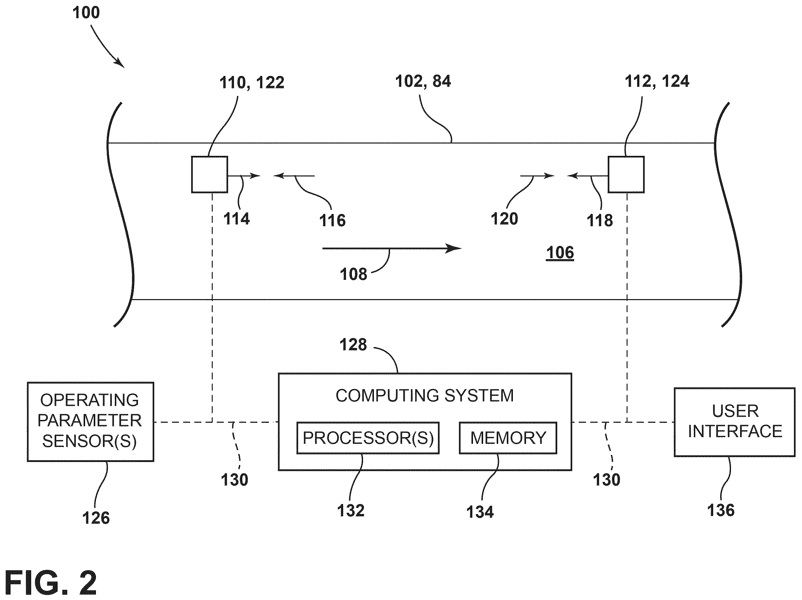

Referring now to FIG. 2, a diagrammatic view of one embodiment of an apparatus 100 for monitoring fluid flow is illustrated in accordance with aspects of the present subject matter. In general, the apparatus 100 will be described herein with reference to the gas turbine engine 10 described above with reference to FIG. 1. However, it should be appreciated by those of ordinary skill in the art that the disclosed apparatus 100 may generally be utilized with gas turbine engine having any other suitable engine configuration and with any other suitable application outside of gas turbine engine.

As shown in FIG. 2, the apparatus 100 includes a fluid conduit 102 defining a flow passage 106 through which a fluid flows in a direction of flow 108. For example, in the illustrated embodiment, the fluid conduit 102 may be one of the fuel conduits 84 that supply fuel to the gas turbine engine 10. In such an embodiment, the fuel flow through the flow passage 106 from the fuel tank(s) 82 (FIG. 1) in the direction of flow 108 to the fuel nozzle(s) 80 (FIG. 1). However, in alternative embodiments, the fluid conduit 102 may be configured to convey any other suitable type of fluid, such as oil, coolant, sCO₂, or the like.

The fluid flowing through the fluid conduit 102 may be a liquid, a gas, or a mixture thereof.

Furthermore, the apparatus 100 includes first and second transceiver-based sensors 110, 112 associated with (e.g., positioned within) the flow passage 106. n some embodiments, the first and second transceiver-based sensors 110, 112 may be positioned within the flow passage 106 such that the first and second transceiver-based sensors 110, 112 is in direct contact with the fluid flow through the flow passage 106. Alternatively, the first and second transceiver-based sensors 110, 112 may be buffered from the fluid flow through the flow passage 106 via a buffer rod(s) (not show) or other suitable mechanism(s).

More specifically, as shown, the second transceiver-based sensor 112 is positioned downstream of the first transceiver-based sensor 110 relative to the direction of flow 108 of the fluid (e.g., fuel) through the flow passage 106. In this respect, the first transceiver-based sensor 110 is configured to emit a first sensor signal 114 downstream through the flow passage 106 toward the second transceiver-based sensor 112. Based on the time period between when the first transceiver-based sensor 110 emits the first sensor signal 114 and the second transceiver-based sensor 112 receives the first sensor signal 114 (the time of flight), the flow rate of the fluid within the flow passage 106 can be determined. Similarly, the second transceiver-based sensor 112 is configured to emit a second sensor signal 118 upstream through the flow passage 106 toward the first transceiver-based sensor 110. Based on the time period between when the second transceiver-based sensor 112 emits the second sensor signal 118 and the first transceiver-based sensor 112 receives the second sensor signal 118 (the time of flight), the flow rate of the fluid within the flow passage 106 can be determined. Thus, the use of the first and second transceiver-based sensors 110, 112 provide redundant monitoring of the fluid flow (e.g., the flow rate) within the fluid conduit 102. Moreover, a portion of the first sensor signal 114 is reflected off of the second transceiver-based sensor 112 as a first reflection signal 116. The first reflection signal 116, in turn, is received by the first transceiver-based sensor 110. Similarly, a portion of the second sensor signal 118 is reflected off of the first transceiver-based sensor 110 as a second reflection signal 120. The second reflection signal 120, in turn, is received by the second transceiver-based sensor 112. As will be described below, the first and second reflection signals 116, 120 are used to calibrate the first and second transceiver-based sensors 110, 112 to ensure that the timing of such sensors 110, 112 is aligned.

The first and second transceiver-based sensors 110, 112 may be configured as any suitable type of sensors or sensing devices configured to operate as described above. For example, in several embodiments, the first and second transceiver-based sensors 110, 112 may be configured as first and second ultrasonic sensors 122, 124. In such embodiments, the first ultrasonic sensor 122 is configured to emit a first ultrasonic signal and the second ultrasonic sensor 124 is configured to emit a second ultrasonic signal.

Additionally, in some embodiments, the apparatus 100 may include one or more operating parameter sensors 126. In general, the operating parameter sensor(s) 126 is configured to generate data indicative of one or more operating parameters associated with an engine (e.g., the gas turbine engine 10) to which the fluid conduit 102 supplies the fluid (e.g., the fuel). For example, in one embodiment, the operating parameter sensor(s) 126 may include one or more temperature sensor(s) configured to generate data indicative of one or more temperatures associated with the engine (e.g., the temperature of the fuel). However, in alternative embodiments, the operating parameter sensor(s) 126 may include any other suitable types of sensors in addition to or in lieu of the temperature sensor(s), such as one or more pressure sensors. As will be described below, the data generated by the operating parameter sensor(s) 126 may be used to determine when to calibrate the first and second transceiver-based sensors 110, 112.

Moreover, the apparatus 100 includes a computing system 128 communicatively coupled to one or more components of the apparatus 100 to allow the operation of such components to be electronically or automatically controlled by the computing system 128. For instance, the computing system 128 may be communicatively coupled to the first and second transceiver-based sensors 110, 112 via a communicative link 130. As such, the computing system 128 may be configured to receive data from the first and second transceiver-based sensors 110, 112, which is indicative of the times of flight of the first and second sensor signals 114, 118. Furthermore, the computing system 128 may be communicatively coupled to the operating parameter sensor(s) 126 via the communicative link 130. In this respect, the computing system 128 may be configured to receive data from the operating parameter sensor(s) 126 that is indicative of one or more operating parameters of the gas turbine engine (e.g., the gas turbine engine 10). In addition, the computing system 128 may be communicatively coupled to any other suitable components of the apparatus 100.

In general, the computing system 128 may include one or more processor-based devices, such as a given controller or computing device or any suitable combination of controllers or computing devices. Thus, in several embodiments, the computing system 128 may include one or more processor(s) 132 and associated memory device(s) 134 configured to perform a variety of computer-implemented functions. As used herein, the term "processor" refers not only to integrated circuits referred to in the art as being included in a computer, but also refers to a controller, a microcontroller, a microcomputer, a programmable logic circuit (PLC), an application specific integrated circuit, and other programmable circuits. Additionally, the memory device(s) 134 of the computing system 128 may generally comprise memory element(s) including, but not limited to, a computer-readable medium (e.g., random access memory RAM)), a computer-readable non-volatile medium (e.g., a flash memory), a floppy disk, a compact disk-read only memory (CD-ROM), a magnetooptical disk (MOD), a digital versatile disk (DVD) and/or other suitable memory elements. Such memory device(s) 134 may generally be configured to store suitable computer-readable instructions that, when implemented by the processor(s) 132, configure the computing system 128 to perform various computer-implemented functions, such as one or more aspects of the methods and algorithms that will be described herein. In addition, the computing system 128 may also include various other suitable components, such as a communications circuit or module, one or more input/output channels, a data/control bus, and/or the like.

The various functions of the computing system 128 may be performed by a single processor-based device or may be distributed across any number of processor-based devices, in which instance such devices may be considered to form part of the computing system 128. For instance, the functions of the computing system 128 may be distributed across multiple application-specific controllers or computing devices, such as a fuel system controller, an engine controller, and/or the like.

In addition, the apparatus 100 may also include a user interface 136. More specifically, the user interface 136 may be configured to provide feedback from the computing system 128 (e.g., feedback associated with maintenance of the first and second transceiver-based sensors 110, 112) to the operator or third party. As such, the user interface 136 may include one or more feedback devices (not shown), such as display screens, speakers, warning lights, and/or the like, which are configured to provide feedback from the computing system 128 to the operator/third party. As such, the user interface 136 may, in turn, be communicatively coupled to the computing system 128 via the communicative link 130 to permit the feedback to be transmitted from the computing system 128 to the user interface 136. Furthermore, some embodiments of the user interface 136 may include one or more input devices, such as touchscreens, keypads, touchpads, knobs, buttons, sliders, switches, mice, microphones, and/or the like, which are configured to receive inputs from the operator. For example, the user interface 136 may be positioned within the cockpit of the aircraft on which the engine is mounted, in a ground-based control center or maintenance facility, or the like.

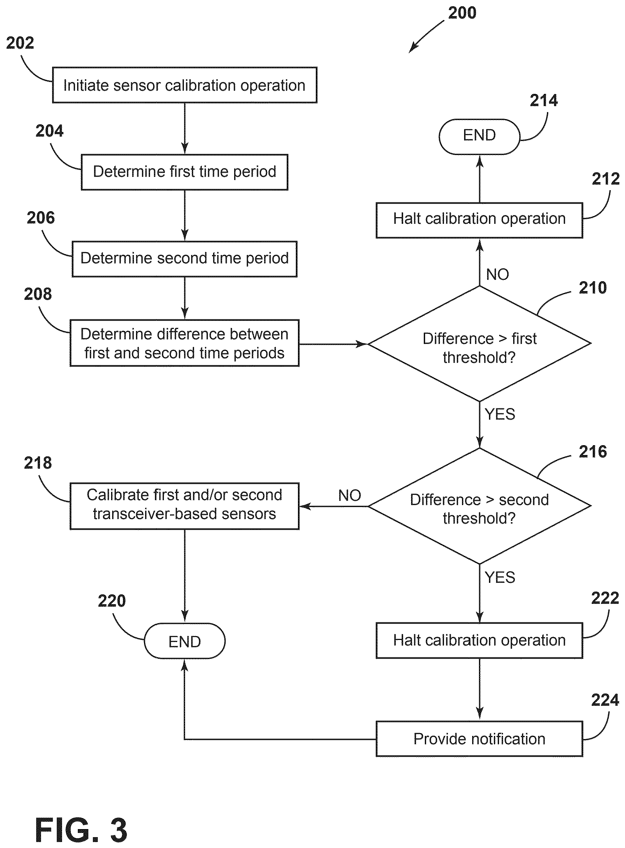

Referring now to FIG. 3, a flow diagram of one embodiment of example control logic 200 that may be executed by the computing system 128 (or any other suitable computing system) for monitoring fluid flow is illustrated in accordance with aspects of the present subject matter. Specifically, the control logic 200 shown in FIG. 3 is representative of steps of one embodiment of an algorithm that can be executed to monitor fluid flow in a manner that improves the accuracy and precision of the flow measurements. Specifically, the control logic 200 may be advantageously utilized in association with the 100 system to allow for in situ calibration of redundant transceiver-based sensors used to monitor fluid flow.

As shown, at (202), the control logic 200 includes initiating a sensor calibration operation. Specifically, in several embodiments, the computing system 128 may be configured to initiate a sensor calibration operation for the first and second transceiver-based sensors 110, 112 (e.g., the first and second ultrasonic sensors 122, 124). In general, the sensor calibration operation checks to ensure that the timing of the first and second transceiver-based sensors 110, 112 are aligned and, if not, calibrates the sensors 110, 112. As will be described below, the sensor calibration operation may initiated based on a variety of inputs and/or conditions.

In some embodiments, at (202), the sensor calibration operation may be initiated based on an operating parameter associated with an engine to which the fluid conduit supplies the fluid. Specifically, in several embodiments, the computing system 128 may be configured to receive data from the operating parameter sensor(s) 126 during the operation of the gas turbine engine 10. In this respect, the computing system 128 may be configured to determine one or more operating parameters of the engine 10 based on the data generated by the operating parameter sensor(s) 126. Thereafter, the computing system 128 may be configured to initiate the sensor calibration operation based on the determined operating parameter(s). For example, the computing system 128 may initiate the sensor calibration operation when one or more of the operating parameters fall outside of a range(s), exceed a maximum threshold(s), and/or fall below a minimum threshold(s). In one embodiment, the operating parameter(s) is a temperature, such as the temperature of the fuel flowing through the fuel conduit 84. As mentioned above, the temperature of the fuel can affect the timing alignment of the first and second transceiver-based sensor(s) 110, 112. Thus, in such an embodiment, the computing system 128 may initiate the sensor calibration operation when the temperature of the fuel falls outside of a predetermined temperature range.

Furthermore, in some embodiments, at (202), the sensor calibration operation may be initiated based on a variety of other inputs and/or conditions. For example, in one embodiment, the computing system 128 may be configured to initiate the sensor calibration operation in response to an operator input (e.g., an operator input received via the user interface 136). In such an embodiment, the sensor calibration operation can be performed "on demand." In another embodiment, the computing system 128 may be configured to initiate the sensor calibration operation at least once per operational cycle of the engine to which the fluid conduit 102 supplies the fluid (e.g., the gas turbine engine 10). The operational cycle of the engine, in turn, may correspond to the time from when the engine is started to when the engine is shut down or may correspond to a flight. In a further embodiment, the computing system 128 may be configured to initiate the sensor calibration operation after a predetermined interval has elapsed (e.g., a predetermined time interval, a predetermined amount of fuel is burned, etc.). In yet another embodiment, the computing system 128 is configured to initiate the sensor calibration operation continuously. That is, the sensor calibration operation is performed each time the first and second transceiver-based sensors 110, 112 sample the fuel flow.

Additionally, at (204), in response to initiating the sensor calibration operation, the control logic 200 includes determining a first time period between when the first transceiver-based sensor emits a first sensor signal directed at the second transceiver-based sensor and when the first transceiver-based sensor receives a first reflection signal corresponding to a portion of the first sensor signal that is reflected off of the second transceiver-based sensor. Specifically, in several embodiments, in response to initiating the sensor calibration operation at (202), the computing system 128 is configured to determine a first time period between when the first transceiver-based sensor 110 emits the first sensor signal 114 directed at the second transceiver-based sensor 112 and when the first transceiver-based sensor 110 receives the first reflection signal 116 corresponding to a portion of the first sensor signal 114 that is reflected off of the second transceiver-based sensor 112.

Moreover, at (206), in response to initiating the sensor calibration operation, the control logic 200 includes determining a second time period between when the second transceiver-based sensor emits a second sensor signal directed at the first transceiver-based sensor and when the second transceiver-based sensor receives a second reflection signal corresponding to a portion of the second sensor signal that is reflected off of the first transceiver-based sensor. Specifically, in several embodiments, in response to initiating the sensor calibration operation at (202), the computing system 128 is configured to determine a second time period between when the second transceiver-based sensor 112 emits the second sensor signal 118 directed at the first transceiver-based sensor 110 and when the second transceiver-based sensor 112 receives the second reflection signal 120 corresponding to a portion of the second sensor signal 118 that is reflected off of the first transceiver-based sensor 110. Although (204) and (206) are described separately for clarity, in many instances, (204) and (206) are performed simultaneously.

In addition, at (208), the control logic 200 includes determining a difference between the first time period and the second time period. Specifically, in several embodiments, the computing system 128 may be configured to determine the difference between the first time period determined at (204) and the second time period determined at (206). As indicated above, the first sensor signal 114 and the associated first reflection signal 116 travel through the flow passage 106 in the downstream direction and then the upstream direction. Similarly, the second sensor signal 118 and the associated second reflection signal 120 travel through the flow passage 106 in the upstream direction and then downstream direction. Thus, both signals 114, 118 have effectively experienced the same flow conditions. As such, when the timing of the first and second transceiver-based sensors 110, 112 are aligned, the difference in the difference in the first time determined at (204) and the second time determined at (206) should be zero or close to zero.

As shown in FIG. 3, at (210), the control logic 200 includes determining when the difference exceeds a first threshold value. Specifically, in several embodiments, the computing system 128 may be configured to determine when the difference determined at (208) is greater than the first threshold value. The first threshold value may be zero are a value close to zero. When the difference is equal to or less than the first threshold value, the first and second transceiver-based sensors 110, 112 do not need calibration. In such instances, the control logic 200 proceeds to (212) at which the computing system 128 is configured to halt the sensor calibration operation. Thereafter, the control logic 200 ends at (214). Conversely, when the difference exceeds the threshold value, the control logic 200 proceeds to (216).

At (216), the control logic 200 includes determining when the difference exceeds a second threshold value that is greater than the first threshold value. Specifically, in several embodiments, the computing system 128 may be configured to determine when the difference determined at (208) is greater than the second threshold value. When the difference is equal to or less than the second threshold value (and also is greater than the first threshold value), the first and/or second transceiver-based sensors 110, 112 should be calibrated. In such instances, the control logic 200 proceeds to (218).

As shown in FIG. 3, at (218), the control logic 200 includes calibrating at least one of the first transceiver-based sensor or the second transceiver-based sensor. Specifically, in several embodiments, when the difference determined at (208) exceeds the first threshold value but is equal to or less than the second threshold value, the computing system 128 is configured to calibrate the first transceiver-based sensor 110 and/or the second transceiver-based sensor 112. For example, in some embodiments, the computing system 128 is configured to determine a timing calibration factor. The timing calibration factor, in turn, may be value applied to the data being generated by the first and/or second transceiver-based sensors 110, 112 to align their timing. Thereafter, the control logic 200 ends at (220).

Conversely, when the difference exceeds the second threshold value, the control logic 200 proceeds to (222). As shown, at (222), the control logic 200 includes halting the sensor calibration operation. Specifically, when the difference exceeds the second threshold value, the mismatch in the timing of the first and second transceiver-based sensors 110, 112 may not be correctable via calibration. Thus, in such instances, the computing system 128 may halt the sensor calibration operation.

Furthermore, at (224), the control logic 200 includes providing a notification. As mentioned above, when the difference exceeds the second threshold value, the mismatch in the timing of the first and second transceiver-based sensors 110, 112 may not be correctable via calibration. In such instances, a maintenance operation may be needed. Thus, in such instances, the computing system 128 is configured to provide a notification indicating that a maintenance operation is to be performed. For example, the computing system 128 may provide such notification via the user interface 136. Thereafter, the control logic 200 ends at (220).

In alternative embodiments, the computing system 128 may provide the notification in other instances. For example, the computing system 128 may be configured to provide the notification when the determined difference (e.g., the difference determined at (208)) increases across a plurality of successive sensor calibration operations. Specifically, in some embodiments, the computing system 128 may be configured to provide the notification when the determined difference fuel flow rates increases across a plurality of successive sensor calibration operations, thereby indicating that further calibration and/or maintenance could be performed.

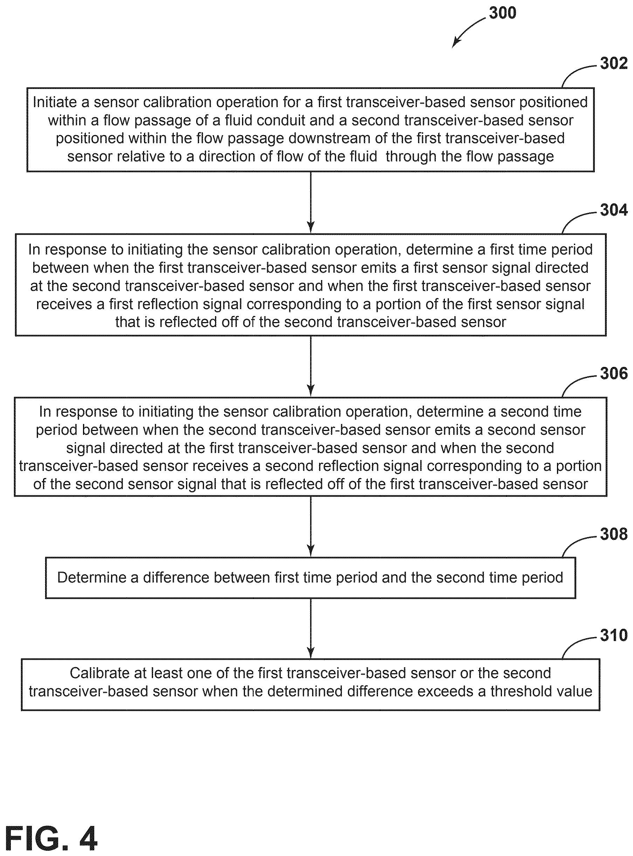

Referring now to FIG. 4, a flow diagram of one embodiment of a method 300 for monitoring fluid flow is illustrated in accordance with aspects of the present subject matter. In general, the method 300 will be described herein with reference to the gas turbine engine 10 and the apparatus 100 described above with reference to FIGS. 1-3. However, it should be appreciated by those of ordinary skill in the art that the disclosed method 300 may generally be implemented with any gas turbine engine having any suitable engine configuration and/or within any system having any suitable system configuration. In addition, although FIG. 4 depicts steps performed in a particular order for purposes of illustration and discussion, the methods discussed herein are not limited to any particular order or arrangement. One skilled in the art, using the disclosures provided herein, will appreciate that various steps of the methods disclosed herein can be omitted, rearranged, combined, and/or adapted in various ways without deviating from the scope of the present disclosure.

As shown in FIG. 4, at (302), the method 300 includes initiating, with a computing system, a sensor calibration operation for a first transceiver-based sensor positioned within a flow passage of a fluid conduit and a second transceiver-based sensor positioned within the flow passage downstream of the first transceiver-based sensor relative to a direction of flow of the fluid through the flow passage. For instance, as described above, the computing system 128 may be configured to initiate a sensor calibration operation for the first and second transceiver-based sensors 110, 112.

Furthermore, at (304), in response to initiating the sensor calibration operation, the method 300 includes determining, with the computing system, a first time period between when the first transceiver-based sensor emits a first sensor signal directed at the second transceiver-based sensor and when the first transceiver-based sensor receives a first reflection signal corresponding to a portion of the first sensor signal that is reflected off of the second transceiver-based sensor. For instance, as described above, in response to initiating the sensor calibration operation, the computing system 128 may be configured to determine a first time period between when the first transceiver-based sensor 110 emits the first sensor signal 114 directed at the second transceiver-based sensor 112 and when the first transceiver-based sensor 110 receives the first reflection signal 116.

Additionally, at (306), in response to initiating the sensor calibration operation, the method 300 includes determining, with the computing system, a second time period between when the second transceiver-based sensor emits a second sensor signal directed at the first transceiver-based sensor and when the second transceiver-based sensor receives a second reflection signal corresponding to a portion of the second transceiver-based signal that is reflected off of the first transceiver-based sensor. For instance, as described above, in response to initiating the sensor calibration operation, the computing system 128 may be configured to determine a second time period between when the second transceiver-based sensor 112 emits the second sensor signal 118 directed at the first transceiver-based sensor 110 and when the first transceiver-based sensor 110 receives the second reflection signal 120.

Moreover, at (308), the method 300 includes determining, with the computing system, a difference between the first time period and the second time period. For instance, as described above, the computing system 128 may be configured to determine the difference between the first time period and the second time period.

In addition, at (310), the method 300 includes calibrating, with the computing system, at least one of the first transceiver-based sensor or the second transceiver-based sensor when the determined difference exceeds a threshold value. For instance, as described above, the computing system 128 may be configured to calibrate the first transceiver-based sensor 110 and/or the second transceiver-based sensor 112 when the determined difference exceeds a threshold value. Specifically, in some embodiments, the computing system 128 may be configured to provide the notification when the determined difference fuel flow rates increases across a plurality of successive sensor calibration operations, thereby indicating that further calibration and/or maintenance could be performed.

Further aspects are provided by the subject matter of the following clauses:

An apparatus for monitoring fluid flow, the apparatus comprising: a fluid conduit defining a flow passage through which a fluid flows; a first transceiver-based sensor associated with the flow passage; a second transceiver-based sensor associated with the flow passage and positioned downstream of the first transceiver-based sensor relative to a direction of flow of the fluid through the flow passage; and a computing system communicatively coupled to the first transceiver-based sensor and the second transceiver-based sensor, the computing system configured to: initiate a sensor calibration operation; in response to initiating the sensor calibration operation, determine a first time period between when the first transceiver-based sensor emits a first sensor signal directed at the second transceiver-based sensor and when the first transceiver-based sensor receives a first reflection signal corresponding to a portion of the first sensor signal that is reflected off of the second transceiver-based sensor; in response to initiating the sensor calibration operation, determine a second time period between when the second transceiver-based sensor emits a second sensor signal directed at the first transceiver-based sensor and when the second transceiver-based sensor receives a second reflection signal corresponding to a portion of the second sensor signal that is reflected off of the first transceiver-based sensor; determine a difference between the first time period and the second time period; and calibrate at least one of the first transceiver-based sensor or the second transceiver-based sensor when the determined difference exceeds a threshold value.

The apparatus of one or more clauses, wherein when calibrating the at least one of the first transceiver-based sensor or the second transceiver-based sensor, the computing system is configured to determine a timing calibration factor.

The apparatus of one or more clauses, wherein the computing system is further configured to halt the sensor calibration operation when the determined difference is equal to or falls below the threshold value.

The apparatus of one or more clauses, wherein the first transceiver-based sensor comprises a first ultrasonic sensor and the second transceiver-based sensor comprises a second ultrasonic sensor.

The apparatus of one or more clauses, further comprising: an operating parameter sensor configured to generate data indicative of an operating parameter associated with an engine to which the fluid conduit supplies the fluid, the operating parameter sensor communicatively coupled to the computing system, wherein the computing system is further configured to: determine the operating parameter based on the data generated by the operating parameter sensor; and initiate the sensor calibration operation based on the determined operating parameter.

The apparatus of one or more clauses, wherein the operating parameter sensor is a temperature sensor and the operating parameter is a temperature.

The apparatus of one or more clauses, wherein the computing system is configured to initiate the sensor calibration operation in response to an operator input.

The apparatus of one or more clauses, wherein the computing system is configured to initiate the sensor calibration operation at least once per operational cycle of an engine to which the fluid conduit supplies the fluid.

The apparatus of one or more clauses, wherein the computing system is configured to initiate the sensor calibration operation after a predetermined interval has elapsed.

The apparatus of one or more clauses, wherein the computing system is configured to initiate the sensor calibration operation continuously.

The apparatus of one or more clauses, wherein: the threshold value corresponds to a first threshold value; and the computing system is further configured to provide a notification when the determined difference exceeds a second threshold value that is greater than the first threshold value.

The apparatus of one or more clauses, wherein the computing system is further configured to halt the sensor calibration operation when the determined difference exceeds the second threshold value.

The apparatus of one or more clauses, wherein the computing system is further configured to provide a notification when the determined difference increases across a plurality of successive sensor calibration operations.

An apparatus for monitoring fuel flow associated with a gas turbine engine, the apparatus comprising: a fuel conduit defining a flow passage through which a fuel flows; a first ultrasonic sensor associated with the flow passage; a second ultrasonic sensor associated with the flow passage and positioned downstream of the first ultrasonic sensor relative to a direction of flow of the fuel through the flow passage; and a computing system communicatively coupled to the first ultrasonic sensor and the second ultrasonic sensor, the computing system configured to: initiate a sensor calibration operation; in response to initiating the sensor calibration operation, determine a first time period between when the first ultrasonic sensor emits a first ultrasonic signal directed at the second ultrasonic sensor and when the first ultrasonic sensor receives a first reflection signal corresponding to a portion of the first ultrasonic signal that is reflected off of the second ultrasonic sensor; in response to initiating the sensor calibration operation, determine a second time period between when the second ultrasonic sensor emits a second ultrasonic signal directed at the first ultrasonic sensor and when the second ultrasonic sensor receives a second reflection signal corresponding to a portion of the second ultrasonic signal that is reflected off of the first ultrasonic sensor; determine a difference between the first time period and the second time period; and calibrate at least one of the first ultrasonic sensor or the second ultrasonic sensor when the determined difference exceeds a threshold value.

The apparatus of one or more clauses, wherein when calibrating the at least one of the first ultrasonic sensor or the second ultrasonic sensor, the computing system is configured to determine a timing calibration factor.

The apparatus of one or more clauses, wherein the computing system is further configured to halt the sensor calibration operation when the determined difference is equal to or falls below the threshold value.

The apparatus of one or more clauses, further comprising: an operating parameter sensor configured to generate data indicative of an operating parameter associated with the gas turbine engine, wherein the computing system is further configured to: determine the operating parameter based on the data generated by the operating parameter sensor; and initiate the sensor calibration operation based on the determined operating parameter.

A method for monitoring fluid flow, the method comprising: in response to initiation of a sensor calibration operation for a first transceiver-based sensor associated with a flow passage of a fluid conduit and a second transceiver-based sensor associated with the flow passage and positioned downstream of the first transceiver-based sensor relative to a direction of flow of the fluid through the flow passage, determining, with the computing system, a first time period between when the first transceiver-based sensor emits a first sensor signal directed at the second transceiver-based sensor and when the first transceiver-based sensor receives a first reflection signal corresponding to a portion of the first sensor signal that is reflected off of the second transceiver-based sensor; in response to initiating the sensor calibration operation, determining, with the computing system, a second time period between when the second transceiver-based sensor emits a second sensor signal directed at the first transceiver-based sensor and when the second transceiver-based sensor receives a second reflection signal corresponding to a portion of the second sensor signal that is reflected off of the first transceiver-based sensor; determining, with the computing system, a difference between the first time period and the second time period; and calibrating, with the computing system, at least one of the first transceiver-based sensor or the second transceiver-based sensor when the determined difference exceeds a threshold value.

The method of one or more clauses, wherein calibrating the at least one of the first transceiver-based sensor or the second transceiver-based sensor comprises determining, with the computing system, a timing calibration factor.

The method of one or more clauses, further comprising: halting, with the computing system, the sensor calibration operation when the determined difference is equal to or falls below the threshold value.

This written description uses examples to disclose the present disclosure, including the best mode, and also to enable any person skilled in the art to practice the disclosure, including making and using any devices or systems and performing any incorporated methods. The patentable scope of the disclosure is defined by the claims and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

## Claims

1. An apparatus for monitoring fluid flow, the apparatus comprising:
a fluid conduit defining a flow passage through which a fluid flows;
a first transceiver-based sensor associated with the flow passage;
a second transceiver-based sensor associated with the flow passage and positioned downstream of the first transceiver-based sensor relative to a direction of flow of the fluid through the flow passage; and
a computing system communicatively coupled to the first transceiver-based sensor and the second transceiver-based sensor, the computing system configured to:
initiate a sensor calibration operation;
in response to initiating the sensor calibration operation, determine a first time period between when the first transceiver-based sensor emits a first sensor signal directed at the second transceiver-based sensor and when the first transceiver-based sensor receives a first reflection signal corresponding to a portion of the first sensor signal that is reflected off of the second transceiver-based sensor;
in response to initiating the sensor calibration operation, determine a second time period between when the second transceiver-based sensor emits a second sensor signal directed at the first transceiver-based sensor and when the second transceiver-based sensor receives a second reflection signal corresponding to a portion of the second sensor signal that is reflected off of the first transceiver-based sensor;
determine a difference between the first time period and the second time period; and
calibrate at least one of the first transceiver-based sensor or the second transceiver-based sensor when the determined difference exceeds a threshold value.

2. The apparatus of claim 1, wherein when calibrating the at least one of the first transceiver-based sensor or the second transceiver-based sensor, the computing system is configured to determine a timing calibration factor.

3. The apparatus of any preceding claim, wherein the computing system is further configured to halt the sensor calibration operation when the determined difference is equal to or falls below the threshold value.

4. The apparatus of any preceding claim, wherein the first transceiver-based sensor comprises a first ultrasonic sensor and the second transceiver-based sensor comprises a second ultrasonic sensor.

5. The apparatus of any preceding claim, further comprising:
an operating parameter sensor configured to generate data indicative of an operating parameter associated with an engine to which the fluid conduit supplies the fluid, the operating parameter sensor communicatively coupled to the computing system,
wherein the computing system is further configured to:
determine the operating parameter based on the data generated by the operating parameter sensor; and
initiate the sensor calibration operation based on the determined operating parameter; wherein
optionally, the operating parameter sensor is a temperature sensor and the operating parameter is a temperature.

6. The apparatus of any preceding claim, wherein the computing system is configured to initiate the sensor calibration operation in response to an operator input.

7. The apparatus of any preceding claim, wherein the computing system is configured to initiate the sensor calibration operation at least once per operational cycle of an engine to which the fluid conduit supplies the fluid.

8. The apparatus of any preceding claim, wherein the computing system is configured to initiate the sensor calibration operation after a predetermined interval has elapsed.

9. The apparatus of any preceding claim, wherein:
the threshold value corresponds to a first threshold value;
the computing system is further configured to provide a notification when the determined difference exceeds a second threshold value that is greater than the first threshold value; and,
optionally, the computing system is further configured to halt the sensor calibration operation when the determined difference exceeds the second threshold value.

10. The apparatus of any preceding claim, wherein the computing system is further configured to provide a notification when the determined difference increases across a plurality of successive sensor calibration operations.

11. An apparatus for monitoring fuel flow associated with a gas turbine engine, the apparatus comprising:
a fuel conduit defining a flow passage through which a fuel flows;
a first ultrasonic sensor associated with the flow passage;
a second ultrasonic sensor associated with the flow passage and positioned downstream of the first ultrasonic sensor relative to a direction of flow of the fuel through the flow passage; and
a computing system communicatively coupled to the first ultrasonic sensor and the second ultrasonic sensor, the computing system configured to:
initiate a sensor calibration operation;
in response to initiating the sensor calibration operation, determine a first time period between when the first ultrasonic sensor emits a first ultrasonic signal directed at the second ultrasonic sensor and when the first ultrasonic sensor receives a first reflection signal corresponding to a portion of the first ultrasonic signal that is reflected off of the second ultrasonic sensor;
in response to initiating the sensor calibration operation, determine a second time period between when the second ultrasonic sensor emits a second ultrasonic signal directed at the first ultrasonic sensor and when the second ultrasonic sensor receives a second reflection signal corresponding to a portion of the second ultrasonic signal that is reflected off of the first ultrasonic sensor;
determine a difference between the first time period and the second time period; and
calibrate at least one of the first ultrasonic sensor or the second ultrasonic sensor when the determined difference exceeds a threshold value.

12. The apparatus of claim 11, wherein when calibrating the at least one of the first ultrasonic sensor or the second ultrasonic sensor, the computing system is configured to determine a timing calibration factor.

13. The apparatus of claim 11 or 12, wherein the computing system is further configured to halt the sensor calibration operation when the determined difference is equal to or falls below the threshold value.

14. The apparatus of any of claims 11 to 13, further comprising:
an operating parameter sensor configured to generate data indicative of an operating parameter associated with the gas turbine engine,
wherein the computing system is further configured to:
determine the operating parameter based on the data generated by the operating parameter sensor; and
initiate the sensor calibration operation based on the determined operating parameter.

15. A method for monitoring fluid flow, the method comprising:
in response to initiation of a sensor calibration operation for a first transceiver-based sensor associated with a flow passage of a fluid conduit and a second transceiver-based sensor associated with the flow passage and positioned downstream of the first transceiver-based sensor relative to a direction of flow of the fluid through the flow passage, determining, with the computing system, a first time period between when the first transceiver-based sensor emits a first sensor signal directed at the second transceiver-based sensor and when the first transceiver-based sensor receives a first reflection signal corresponding to a portion of the first sensor signal that is reflected off of the second transceiver-based sensor;
in response to initiating the sensor calibration operation, determining, with the computing system, a second time period between when the second transceiver-based sensor emits a second sensor signal directed at the first transceiver-based sensor and when the second transceiver-based sensor receives a second reflection signal corresponding to a portion of the second sensor signal that is reflected off of the first transceiver-based sensor;
determining, with the computing system, a difference between the first time period and the second time period; and
calibrating, with the computing system, at least one of the first transceiver-based sensor or the second transceiver-based sensor when the determined difference exceeds a threshold value.
